# EUROPEAN PATENT SPECIFICATION

(11) **EP 1 733 860 B1**
(45) Date of publication and mention of the grant of the patent: **27.10.2010**
(21) Application number: 06380155.9
(22) Date of filing: 08.06.2006
(51) Int. Cl.: B29C 45/14, B60G 7/00

(54) **Rubber bearing, manufacturing process and apparatus**
Gummilager, Fertigungsverfahren und Werkzeug
Support en caoutchouc, procédé de fabrication et outillage

(30) Priority: 14.06.2005 EP 05380127
(43) Date of publication of application: 20.12.2006
(73) Proprietor: Industria Auxiliar Alavesa, S.A. (Inauxa), 01470 Amurrio (Alava) (ES)
(72) Inventor: Morales Arnaez, Agustin, 48993 Algorta Vizcaya (ES)
(74) Representative: Carvajal y Urquijo, Isabel

(56) References cited:
- EP-A1- 0 496 044
- EP-A1- 1 346 809
- DE-A1- 3 138 534
- JP-A- 11 108 093
- US-A- 1 729 328
- US-A- 2 749 160

## Description

### Field of the Invention

The invention relates to a silentblock device of the type used in automotion, to the manufacturing process of said silentblock as well as the apparatus wherein the device is manufactured according to the process.

### Background of the Invention

Various embodiments describing the silentblock devices are known in the state of the art.

The invention disclosed in EP 0 496 044 relates to an elastic support, in particular for the support of a spring eye on the body of a vehicle, which support comprises a rubber-metal part having an inner, cylindrical metal part, an outer metal tube and a rubber body vulcanised in between in a securely adhering mariner. The outer metal tube has an axial slit, which is closed when the rubber-metal part is pressed into a receiving eye. The diameter at the respective end face of the rubber-metal part and of the outer metal tube decreases continuously towards a smaller diameter in the axial centre. As a result, insertion into unmachined receiving eyes, in particular into unmachined spring eyes, is possible without inadmissibly high stresses occurring.

JP 11 108 093 refers to an invention to surely secure the adhesive property between a rubber elastic body and a resin outer tube, as well as to secure a high fatigue durability of the rubber elastic body surely by applying a pre-compression securely to the rubber elastic body. Thus, JP 11 108 093 discloses an integral article made by fixing a tubular rubber elastic body on the outer periphery of an inner tube. After a thermosetting type adhesive is applied to at least one side of the inner surface of a resin outer tube and the outer surface of the rubber elastic body, the integral article is pressed into the outer tube so as to manufacture an assembly article. By injecting the molten resin of a resin installing body into a cavity in the condition to provide the assembly article in the cavity of an injection molding mold, the thermosetting type adhesive is hardened by the melting heat of the molten resin, so as to adhere the rubber elastic body and the outer tube.

Nevertheless, the embodiments proposed in the state of the art require a precise adjustment both in the manufacture and in the later assembly of the components of the device. This high degree of precision in the manufacture is necessary because it could even happen that the assembly is not possible if the tolerances of the components are too wide or if, even in the event that they are more restrictive, the manufactured pieces do not comply with said design tolerances; these tolerances will also have a repercussion in the performance of the device.

The silentblock devices with unsuitable tolerances cause a series of inadmissible defects. These defects, in addition to being observable in a recently manufactured device, entail a premature deterioration of the device, shorten its working life and affect the use of the device.

Another feature that the silentblock devices must have is tightness. The tightness must be assured through the adjustment of the components themselves of the silentblock, the design and manufacture tolerances of said components yet again being important.

Another additional feature which the silentblock devices must have is modularity, this being understood as the ability to form a module which is integrated in a system of which said silentblock device forms part. The devices known in the state of the art have a design and construction which do not facilitate this ability to be integrated in a system in a manner that can be easily adapted to different systems because they require the system itself to be modified for this.

### Description of the invention

The present invention proposes a silentblock device, a process for manufacturing said silentblock and an apparatus wherein the silentblock is manufactured by said process solving the drawbacks present in the state of the art set forth previously.

The design of the joining means and the areas in contact of the components of the silentblock device in the joining surfaces assure the tightness required in this type of devices. Said joining means also allow simplifying the manufacturing process of the device because the dispersions in the contact areas are absorbed by the configuration itself of said means; the flaring or tapering in the contact areas between the ends of the casing and the outer silentblock seating or bushing.

The relation between the casing and the seating also allows the casing to be designed such that it can be adapted to different applications according to the silentblock device to be incorporated.

The present invention also relates to the manufacturing process of a joining and stress-transmitting element or link or compass including the present silentblock device. The joining elements manufactured according to present invention, the material forming the arm or link is over-injected on the previously manufactured silentblock device, in contrast to the usual manufacturing practice, wherein the arm or link is formed first and afterwards a silentblock device or other component is coupled to the ends of the arm.

The shape of the ends of the seating or outer bushing of the device, provided with several flares or tapers, allow a series of advantages over conventional silentblock devices: once the silentblock device has been over-injected to form part of a joining or stress-transmitting element or link or compass, said silentblock device is perfectly clamped inside the link or compass assembly because the flared ends have a flange effect, allowing the silentblock device to work under all types of stresses: axial, gimbal, conical, whereas conventional silentblocks have limitations for supporting this type of stresses, especially axial stresses.

The device of the invention also allows any type of material for the over-injection as long as said material is compatible, or does not damage the shock absorber or elastic element arranged between the inner silentblock or bushing and the outer seating or bushing due to the features of said elastic element of resistance to heat, adhesives, glues, melting point, corrosion.

According to a first aspect, the invention describes a silentblock device comprising: -
a substantially cylindrical inner silentblock or bushing; an outer silentblock seating or bushing comprising:
   a seating housing for housing the inner silentblock or bushing, said seating housing being configured to allow a pivoting movement of the silentblock in said seating housing, this pivoting movement being limited by the elasticity allowed by the rubber joint between the inner silentblock or bushing and the outer silentblock seating or bushing;
   a seating opening in each end of the outer seating or bushing configured to allow introducing the inner silentblock or bushing in said seating housing;
a shock absorber between the inner silentblock or bushing and the outer seating or bushing to limit the pivoting movement between the inner silentblock or bushing and the outer seating or bushing;
a substantially cylindrical casing comprising:
   a casing housing for housing the outer seating or bushing, said casing housing being configured to avoid the relative movement between the casing and the outer seating or bushing;
   a casing opening in each end of the casing configured to allow introducing the outer seating or bushing in the casing housing;
   first joining means between the casing and the outer seating or bushing formed by a frusto-conical portion in each end of the casing and a frusto-conical portion conjugated in each end of the outer seating or bushing to clamp the outer seating or bushing to the casting;
**characterized in that** the substantially cylindrical casing is obtained by over-injection of plastic material onto an outer surface to be over-injected of the seating containing the shock absorber and the silentblock.

In the device of the invention, the outer seating or bushing can comprise:
second joining means between the outer seating or bushing and the shock absorber formed by a second frusto-conical portion in each end of the outer seating or bushing and a second frusto-conical portion conjugated in each end of the shock absorber to clamp the shock absorber to the outer seating or bushing.

The shock absorber can comprise an annular groove in each end of the shock absorber so that the shock absorber has a lower resistance to the pivoting movement for small pivot angles. The shock absorber is a component of the device having the resilience and elasticity properties necessary to comply with its function inside the assembly.

In the device of the invention:
the casing can have an inner surface comprising the casing portion and the first frusto-conical portion;
the seating can have a conjugated outer surface comprising the first seating portion and the first conjugated frusto-conical portion;
the inner surface and the outer surface can have a guiding in each end of the casing and of the seating for generating an inner peripheral surface and a conjugated outer peripheral surface selected from circular, polygonal and curved.

The device of the invention can have a thickness H and the frusto-conical portions can have a height d, d being ≤0.3H.

In the device of the invention, the casing can be of a material selected from: thermoplastic material, thermosetting plastic, composite material of plastic matrix; molten ferric material; wrought ferric material; welded ferric material; aluminium; magnesium; and combinations thereof.

The casing can comprise a body formed by a plurality of pieces.

In the device of the invention, the outer silentblock seating or bushing can be of a material selected from: thermoplastic material, thermosetting material; alloyed cast iron; bronze; sintered material; aluminium; magnesium; and combinations thereof.

In the device of the invention, the casing and the outer silentblock seating or bushing can be joined by means of a process selected from welding, riveting, over-injection and combinations thereof.

On the other hand, the shock absorber can be an elastomeric material selected from: natural rubber; synthetic rubber; injectable polyurethane; and combinations thereof.

A second aspect of the invention refers to the process for manufacturing the previously described device
by means of an apparatus for over-injecting on an outer surface to be over-injected of a seating containing a shock absorber and a silentblock, an over-injection product in order to obtain a silentblock device.

Said apparatus can comprise:
containment means configured to define a cavity between the surface to be over-injected and said contention means;
entrance means located in the containment means, for introducing the over injection product in the cavity;
   whereas the process can comprise the following steps:
   i) forming a first conjugated frusto-conical portion in each end of the seating;
   ii) placing the seating containing the shock absorber and the silentblock in a first mould;
   iii) displacing the first mould and a second mould to an over-injection position in which the two moulds form the containment means and define a cavity wherein an over-injection product is over-injected to form the silentblock device of plastic material on the seating containing the shock absorber and the silentblock;
   iv) displacing the first mould and the second mould to a demoulding position in which the silentblock device is removed.

The process can further comprise a prior step i0) for forming a conjugated outer surface of the seating defined by a guiding in each end of the seating, to increase the turning torque between the seating and the over-injected casing. In other words, the conjugated outer surface can be either cylindrical, prismatic or follow an outline defined by several curved bases.

The process of the invention can further comprise, in the over-injection position, the steps:
a) generating a vacuum in the cavity through connecting means by vacuum-generating means;
b) introducing the over-injection product in the cavity through entrance means by introduction means;
c) generating overpressure in the cavity through connecting means by overpressure-generating means in order to obtain a silentblock device.

A third aspect of the invention refers to an apparatus for manufacturing the device by means of the process previously described, wherein said apparatus further comprises coupling means for:
coupling the containment means to the surface to be over-injected;
assuring tightness between the containment means and the surface to be over-injected, adapting the shape of the containment means to the surface to be over-injected.

### Brief Description of the Drawings

A series of drawings will be briefly described below which will aid in better understanding the invention and which are expressly related with an embodiment of said invention set forth as a non-limiting example of the same.

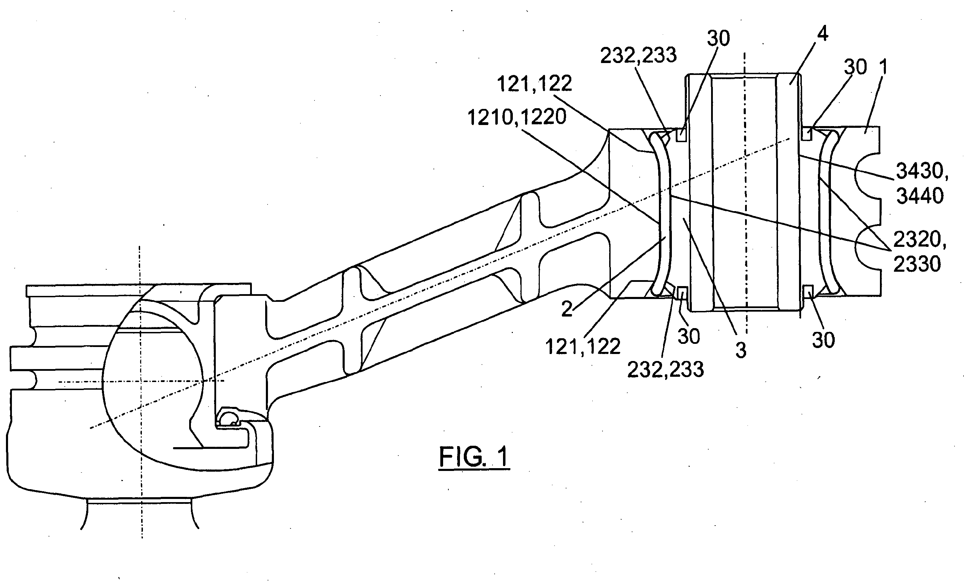

Figure 1 is a sectional view of the device of the invention showing the different assembled components.

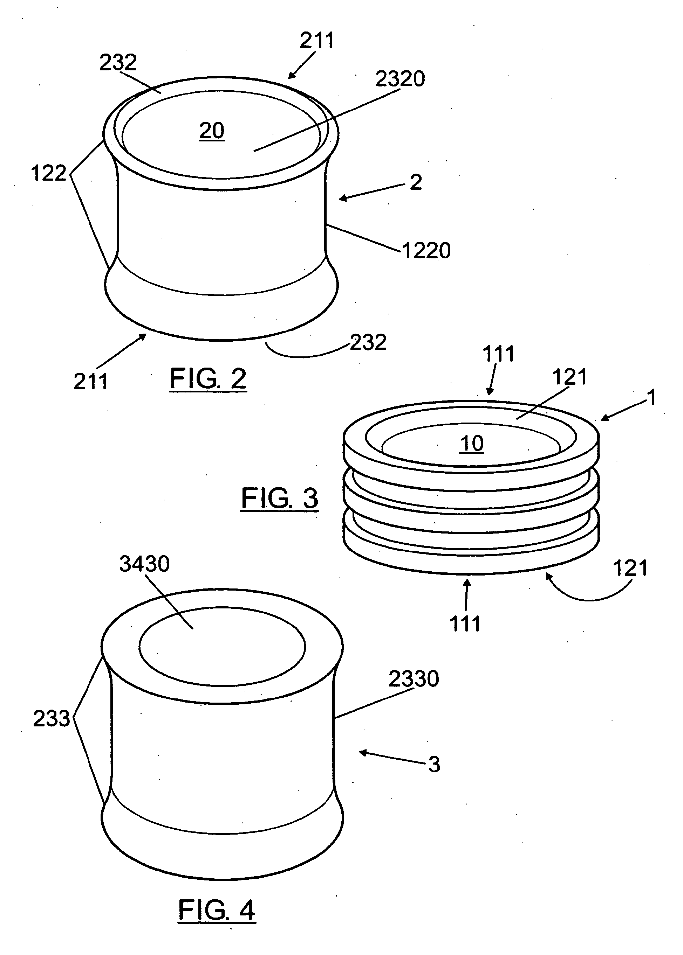

Figure 2 is a perspective view of the outer seating or bushing.
Figure 3 is a perspective view of the casing.
Figure 4 is a perspective view of the shock absorber.

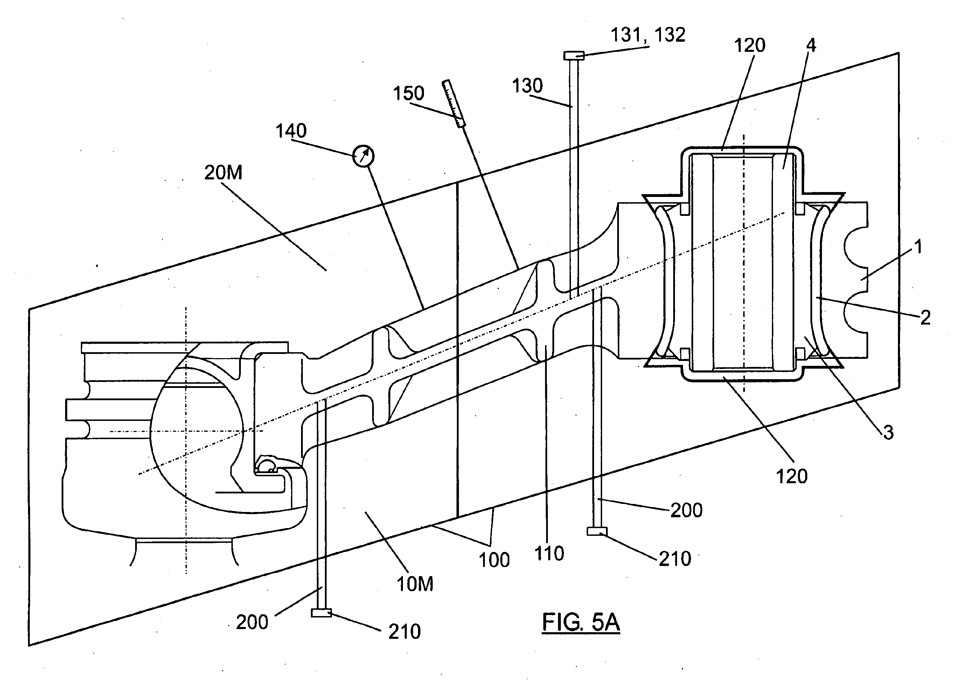

Figure 5A is an elevational sectional view of the apparatus of the invention, in which the coupling means are wrought in the inner shape of the mould, showing the silentblock device of the invention

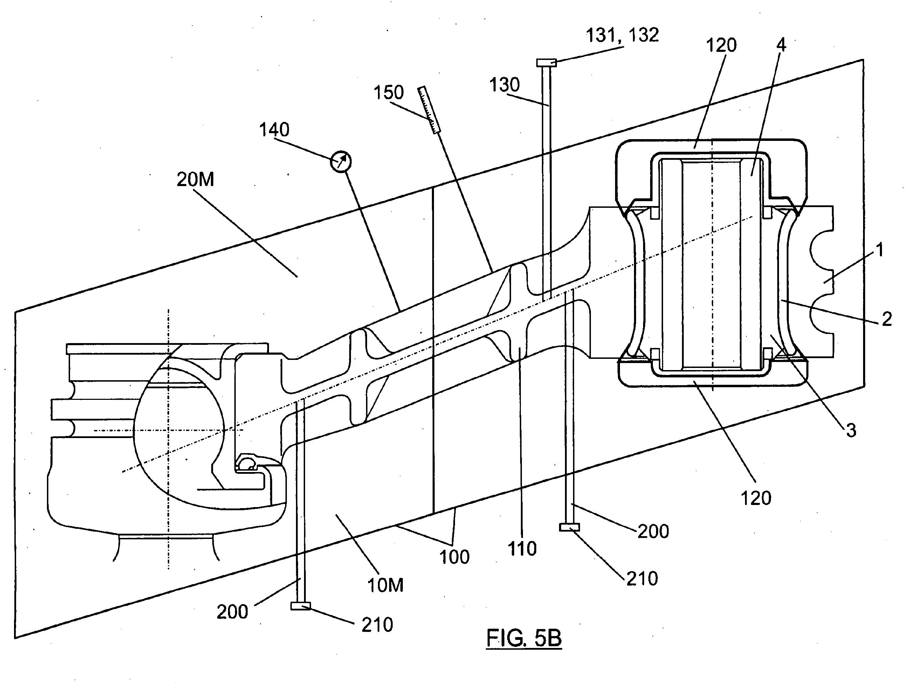

Figure 5B is an elevational sectional view of the apparatus of the invention, in which the coupling means are an additional edge piece or element configured to be adapted on one hand to the shape of the silentblock and on the other hand to the mould, showing the silentblock device of the invention.
Figure 6 is a plan view of the apparatus of the invention showing the silentblock device of the invention.

### Description of a Preferred Embodiment of the Invention

A preferred embodiment of the invention is described below with the help of drawings. Thus, according to the embodiment, the silentblock device can comprise:
a substantially cylindrical inner silentblock or bushing 4;
an outer silentblock seating or bushing **2** that can comprise:
   a seating housing **20** for housing the inner silentblock or bushing **4,** said seating housing **20** being configured to allow a pivoting movement of the inner silentblock or bushing **4** in said seating housing **20**;
   a seating opening **211** in each end of the seating configured to allow introducing the inner silentblock or bushing **4** in said seating housing **20**;
a shock absorber **3** between the inner silentblock or bushing **4** and the outer seating or bushing **2** to limit the pivoting movement between the inner silentblock or bushing **4** and the outer seating or bushing **2;**
a substantially cylindrical casing **1** comprising:
   a casing housing **10** for housing the outer seating or bushing **2**, said casing housing **10** being configured to prevent the relative movement between the casing **1** and the outer seating or bushing **2**;
   a casing opening **111** in each end of the casing configured to allow introducing the outer seating of bushing **2** in the casing housing **10;**
the casing **1** and the outer seating or bushing **2** can comprise:
   first joining means between the casing **1** and the outer seating or bushing **2** to clamp the outer seating or bushing **2** to the casing **1,** said first joining means being able to comprise:
      a first frusto-conical portion **121** having an inner outline in each end of the casing **1,** said first frusto-conical portion **121** converging from each end of the casing **1** towards the casing housing **10,** that is, forming a first concave frusto-conical portion **121;**
      a first conjugated frusto-conical portion **122** having an outer outline in each end of the outer seating or bushing **2**, said first conjugated frusto-conical portion **122** converging from each end of the seating **2,** that is, forming a first conjugated convex frusto-conical portion **122,** said first conjugated convex frusto-conical portion **122** being configured to be coupled to the first concave frusto-conical portion **121** since the first outer outline fits in the first inner outline;
characterized in that the substantially cylindrical casing (1) is obtained by over-injection of plastic material onto an outer surface to be over-injected of the seating (2) containing the shock absorber (3) and the silentblock (4).

In the embodiments of the invention, the outer seating or bushing **2** and the shock absorber 3 can comprise:
second joining means between the outer seating or bushing **2** and the shock absorber **3** to clamp the shock absorber **3** to the outer seating or bushing **2,** said second joining means being able to comprise:
   a second frusto-conical portion **232** having an inner outline in each end of the outer seating or bushing **2,** said second frusto-conical portion **232** converging from each end of the seating **2** towards the seating housing **20,** that is, forming a second concave frusto-conical portion **232;**
   a second conjugated frusto-conical portion **233** having an outer outline in each end of the shock absorber **3,** said second conjugated frusto-conical portion **233** converging from each end of the shock absorber **3,** that is, forming a second conjugated convex frusto-conical portion **233,** said second conjugated convex frusto-conical portion **233** being configured to be coupled to a the second concave frusto-conical portion **232** since the second outer outline fits in the second inner outline.

In the embodiments of the invention, the casing **1** and the outer seating or bushing **2** can comprise:
first adjusting means between the casing **1** and the outer seating or bushing **2** formed by:
   a casing portion **1210** between the ends of the casing **1** having a third inner outline;
   a first seating portion **1220** between the ends of the seating **2** having a third conjugated outer outline;
   configured so that the seating **2** is tightly coupled to the casing **1** since the third conjugated outer outline fits in the third inner outline.

In the embodiments of the invention, the outer seating or bushing **2** and the shock absorber **3** can comprise:
second adjusting means between the outer seating or bushing **2** and the shock absorber **3** formed by: ,
   a second seating portion **2320** between the ends of the seating **2** having a fourth inner outline;
   a first shock absorber portion **2330** between the ends of the shock absorber **3** having a fourth conjugated outer outline;
   configured so that the shock absorber **3** is tightly coupled to the outer seating or bushing **2** since the fourth conjugated outer outline fits in the fourth inner outline.

In the embodiments of the invention, the shock absorber **3** and the inner silentblock or bushing **4** can comprise:
third adjusting means between the shock absorber **3** and the inner silentblock or bushing **4** formed by:
   a second shock absorber portion **3430** between the ends of the shock absorber 3 having a fifth inner outline;
   a silentblock portion **3440** between the ends of the silentblock **4** having a fifth conjugated outer outline;
   configured so that the silentblock **4** is tightly coupled to the shock absorber **3** since the fifth conjugated outer outline fits in the fifth inner outline.

According to an embodiment of the invention, the third outlines, the fourth outlines and the fifth outlines can have a circular cross-section. Both in the case of the circular outlines and of other geometries, for example, square or in a ribbed tree shape, the dimensions and tolerances of the corresponding inner and outer conjugated outlines are determined to allow a tightening adjustment between the components of-the device.

In the embodiments of the invention, the shock absorber **3** can comprise an annular groove **30** in each end of the shock absorber **3** so that the shock absorber **3** has a lower resistance to the pivoting movement for small pivot angles.

In the device of the invention:
the casing **1** can have an inner surface comprising the casing portion **1210** and the first frusto-conical portion **121;**
the seating **2** can have a conjugated outer surface comprising the first seating portion **1220** and the first conjugated frusto-conical portion **122**;
the inner surface and the conjugated outer surface can have a guiding in each end of the casing **1** and of the seating **2** to generate an inner peripheral surface and a conjugated outer peripheral surface selected from circular, polygonal and curved.

The device of the invention can have a thickness H and the frusto-conical portions **121, 122, 232, 233** can have a height d, d being ≤0.3H.

In the embodiments of the invention, the casing **1** can be of a material selected from:
thermoplastic plastic;
thermosetting plastic;
composite material of plastic matrix;
molten ferric material;
wrought ferric material;
welded ferric material;
aluminium;
magnesium;
and combinations thereof.

In the embodiments of the invention, the casing can comprise a body formed by a plurality of pieces.

In the embodiments of the invention, the seating **2** of outer silentblock or bushing can be of a material selected from:
thermoplastic plastic;
thermosetting plastic;
alloyed cast iron;
bronze;
sintered material;
aluminium;
magnesium;
and combinations thereof.

In the embodiments of the invention, the casing **1** and the silentblock seating **2** are joined by means of a process selected from welding, riveting, over-injection and combinations thereof.

In the embodiments of the invention, the shock absorber **3** can be of an elastomeric material selected from:
natural rubber;
synthetic rubber;
plastic;
injectable polyurethane;
and combinations thereof.

A second aspect of the invention refers to a process for manufacturing the previously described device by means of an apparatus for over-injecting on an outer surface to be over-injected of a seating **2** containing a shock absorber **3** and a silentblock **4,** an over-injection product in order to obtain a silentblock device.

Said apparatus can comprise:
containment means **100** configured to define a cavity **110** between the surface to be over-injected and said containment means **100**;
entrance means **200** located in the containment means **100**, so that the over-injection product can be introduced in the cavity **110;**
whereas the process can comprise the steps:
   i) forming a first conjugated frusto-conical portion **122** in each end of the seating **2;**
   ii) placing the seating **2** containing the shock absorber **3** and the silentblock **4** in a first mould **10M;**
   iii) displacing the first mould **10M** and a second mould **20M** to an over-injection position in which the two moulds **10M, 20M** form the containment means **100** and define a cavity **110** wherein the over-injection product is over-injected to form the silentblock device of plastic material on the seating **2** containing the shock absorber **3** and the silentblock **4**;
   iv) displacing the first mould **10M** and the second mould **20M** to a demoulding position in which the silentblock device is removed.

In an embodiment of the invention, the first mould **10M** is a lower mould and the mould **20M** is an upper mould. Each mould **10M, 20M** ean in turn be formed by several pieces: in the over-injection position, the pieces form each mould **10M, 20M,** whereas in the demoulding position, the pieces are separated to facilitate the demoulding. In a preferred embodiment, each mould **10M, 20M** can comprise two halves.

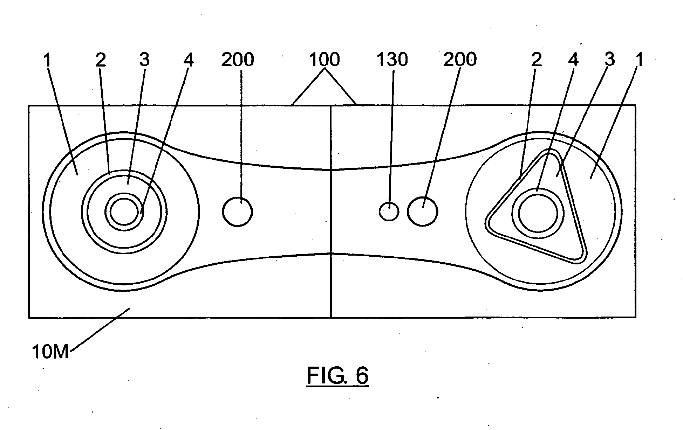

The process can further comprise a prior step i0) for forming a conjugated outer surface of the seating **2** defined by a guiding in each end of the seating **2,** to increase the turning torque between the seating **2** and the over-injected casing **1.** In other words, the conjugated outer surface can be either cylindrical, prismatic or follow an outline defined by several curved bases. These different shapes of the seating **2** are shown in Figure 6 in which a cylindrical silentblock device and a triangular silentblock device can be observed.

The process of the invention can further comprise, in the over-injection position, the steps:
a) generating a vacuum in the cavity **110** through connecting means **130** by vacuum-generating means **131**;
b) introducing the over-injection product in the cavity **110** through entrance means 200 by introduction means **210**;
c) generating overpressure in the cavity **110** through connecting means **130** by overpressure-generating means **132** in order to obtain a silentblock device.

The vacuum-generating step a) can comprise:
a1) reaching a first pressure P1 comprised between 2500Pa and 25kPa in the cavity **110** for a first time t1 comprised between 1s and 120s;
a2) ending step a) con with a second pressure P2 comprised between 2500Pa and 25kPa in the cavity **110** for a second time t2 comprised between 1s and 120s.

The process of the invention can further comprise a prior sub-step a0) for reaching a prior temperature T0 comprised between 20°C and 120°C in the outer surface to be over-injected.

The step b) of over-injection material introduction can comprise:
b1) introducing said material in the cavity which is at a first temperature T1 comprised between 100°C and 400 °C for a third time t3 comprised between 1s and 120s;
b2) ending step b) with a third pressure P3 comprised between 2 MPa and 100 MPa in the cavity **110** for a fourth time t4 comprised between 1s and 120s.

The step c) of overpressure generation can comprise:
c1) starting with a fourth pressure P4 comprised between 2 MPa and 100 MPa in the cavity **110** for a fifth time t5 comprised between 1s and 120s;
c2) ending step c) with a fifth pressure P5 comprised between 2 MPa and 100 MPa in the cavity **110.**

The process of the invention can further comprise previously drying the surface to be over-injected.

The previous drying step can comprise reaching a drying temperature comprised between 20 °C and 150 °C in the surface to be over-injected for a drying time t'0 comprised between 1s and 120s

The process of the invention can also comprise subsequently curing the over-injected surface.

The curing step can comprise reaching a subsequent temperature Tn comprised between 20°C and 150 °C in the over-injected surface for a subsequent time comprised between 1s and 120s.

A third aspect of the invention refers to an apparatus for manufacturing the device by means of the previously described process wherein said apparatus further comprises coupling means 120 for:
coupling the containment means **100** to the surface to be over-injected;
assuring tightness between the containment means **100** and the surface to be over-injected; adapting the shape of the containment means **100** to the surface to be over-injected.

The apparatus can further comprise connecting means **130** located in the containment means **100,** to allow generating a pressure selected from vacuum pressure and overpressure in the cavity **110.**

Additionally, the apparatus can further comprise:
pressure measuring means **140** located in the containment means **100,** for measuring the pressure in the cavity **110;**
temperature measuring means **150** located in the containment means **100,** for measuring the temperature in the cavity **110**.

On the other hand, the apparatus can also comprise:
introduction means **210** for introducing the over-injection product in the cavity **110** through the entrance means **200;**

Optionally, the apparatus can also comprise:
vacuum-generating means **131** for generating a vacuum pressure in the cavity **110** through the connecting means **130;**
overpressure-generating means **132** for generating an overpressure in the cavity **110** through the connecting means **130.**

## Claims

1. A silentblock device comprising:
a substantially cylindrical silentblock (4);
a silentblock seating (2) comprising:
a seating housing (20) for housing the silentblock (4), said seating housing (20) being configured to allow a pivoting movement of the silentblock (4) in said seating housing (20);
a seating opening (211) in each end of the seating configured to allow introducing the silentblock (4) in said seating housing (20);
a shock absorber (3) between the silentblock (4) and the seating (2) to limit the pivoting movement between the silentblock (4) and the seating (2);
a substantially cylindrical casing (1) comprising:
a casing housing (10) for housing the seating (2), said casing housing (10) being configured to prevent the relative movement between the casing (1) and the seating (2);
a casing opening (111) in each end of the casing configured to allow introducing the seating (2) in the casing housing (10);
the casing (1) and the seating (2) comprising:
first joining means between the casing (1) and the seating (2) to clamp the seating (2) to the casing (1), said first joining means comprising:
a first frusto-conical portion (121) having an inner outline in each end of the casing (1), said first frusto-conical portion (121) converging from each end of the casing (1) towards the casing housing (10) to form a first concave frusto-conical portion (121);
a first conjugated frusto-conical portion (122) having a first outer outline in each end of the seating (2), said first conjugated frusto-conical portion (122) converging from each end of the seating (2) to form a first conjugated convex frusto-conical portion (122), said first conjugated convex frusto-conical portion (122) being configured to be coupled to the first concave frusto-conical portion (121) since the first outer outline fits in the first inner outline;
**characterized in that** the substantially cylindrical casing (1) is obtained by over-injection of plastic material onto an outer surface to be over-injected of the seating (2) containing the shock absorber (3) and the silentblock (4).

2. The device of claim 1 wherein the seating (2) and the shock absorber (3) comprise:
second joining means between the seating (2) and the shock absorber (3) to clamp the shock absorber (3) to the seating (2), said second joining means comprising:
a second frusto-conical portion (232) having a second inner outline in each end of the seating (2), said second frusto-conical portion (232) converging from each end of the seating (2) towards the seating housing (20) to form a second concave frusto-conical portion (232);
a second conjugated frusto-conical portion (233) having a second outer outline in each end of the shock absorber (3), said second conjugated frusto-conical portion (233) converging from each end of the shock absorber (3) to form a second conjugated convex frusto-conical portion (233), said second conjugated convex frusto-conical portion (233) being configured to be coupled to the second concave frusto-conical portion (232) since the second outer outline fits in the second inner outline.

3. The device of any of claims 1-2 wherein the casing (1) and the seating (2) comprise:
first adjusting means between the casing (1) and the seating (2) comprising:
a casing portion (1210) between the ends of the casing (1) having a third inner outline;
a first seating portion (1220) between the ends of the seating (2) having a third conjugated outer outline;
configured so that the seating (2) is tightly coupled to the casing (1) since the third conjugated outer outline fits in the third inner outline.

4. The device of any of claims 1-3 wherein the seating (2) and the shock absorber (3) comprise:
second adjusting means between the seating (2) and the shock absorber (3) comprising:
a second seating portion (2320) between the ends of the seating (2) having a fourth inner outline;
a first shock absorber portion (2330) between the ends of the shock absorber (3) having a fourth conjugated outer outline;;
configured so that the shock absorber (3) is tightly coupled to the seating (2) since the fourth conjugated outer outline fits in the fourth inner outline.

5. The device of any of claims 1-4 wherein the shock absorber (3) and the inner silentblock or bushing (4) comprise:
third adjusting means between the shock absorber (3) and the inner silentblock or bushing (4) comprising:
a second shock absorber portion (3430) between the ends of the shock absorber (3) having a fifth inner outline;
a silentblock portion (3440) between the ends of the silentblock (4) having a fifth conjugated outer outline;
configured so that the silentblock (4) is tightly coupled to the shock absorber (3) since the fifth conjugated outer outline fits in the fifth inner outline.

6. The device of any of claims 1-5 wherein the shock absorber (3) comprises an annular groove (30) in each end of the shock absorber (3) so that the shock absorber (3) has a lower resistance to the pivoting movement for small pivot angles.

7. The device of any of claims 3-6 wherein:
the casing (1) has an inner surface comprising the casing portion (1210) and the first
- frusto-conical portion (121);
the seating (2) has a conjugated outer surface comprising the first seating portion (1220) and the first conjugated frusto-conical portion (122);
the inner surface and the conjugated outer surface can have a guiding in each end of the casing (1) and of the seating (2) to generate an inner peripheral surface and a conjugated outer peripheral surface selected from circular, polygonal and curved.

8. The device of any of claims 1-7 having a thickness H wherein the frusto-conical portions (121, 122, 232, 233) have a height d, d being ≤0.3H.

9. The device of any of claims 1-8 wherein the casing (1) is of a material selected from:
thermoplastic plastic;
thermosetting plastic;
composite material of plastic matrix;
molten ferric material;
wrought ferric material;
welded ferric material;
aluminium;
magnesium;
and combinations thereof.

10. The device of any of claims 1-9 wherein the casing (1) comprises a body formed by a plurality of pieces.

11. The device of any of claims 1-10 wherein the silentblock seating (2) is of a material selected from:
thermoplastic plastic;
thermosetting plastic;
alloyed cast iron;
bronze;
sintered material;
aluminium;
magnesium;
and combinations thereof

12. The device of any of claims 1-11 wherein the casing (1) and the silentblock seating (2) are joined by means a process selected from welding, riveting, over-injection and combinations thereof.

13. The device of any of claims 1-12 wherein the shock absorber (3) can be of an elastomeric material selected from:
natural rubber;
synthetic rubber;
plastic;
injectable polyurethane;
and combinations thereof.

14. A process for manufacturing by over-injection the device of any of claims 1-13 by means of an apparatus for over-injecting on an outer surface to be over-injected of a seating (2) containing a shock absorber (3) and a silentblock (4), an over-injection product in order to obtain a silentblock device, said apparatus comprising:
containment means (100) configured to define a cavity (110) between the surface to be over-injected and said containment means (100);
entrance means (200) located in the containment means (100), so that the over-injection product can be introduced in the cavity (110);
said process **characterized in that** it comprises the steps of:
i) forming a first conjugated frusto-conical portion (122) in each end of the seating (2)
ii) placing the seating (2) containing the shock absorber (3) and the silentblock (4) in a first mould (10M);
iii) displacing the first mould (10M) and a second mould (20M) to an over-injection position in which the two moulds (10M, 20M) form the containment means (100) and define a cavity (110) wherein the over-injection product is over-injected to form the silentblock device of plastic material on the seating (2) containing the shock absorber (3) and the silentblock (4);
iv) displacing the first mould (10M) and the second mould (20M) to a demoulding position in which the silentblock device is removed.

15. The process of claim 14 which further comprises a prior step i0) for forming a conjugated outer surface of the seating (2) defined by a guiding in each end of the seating (2), to increase the turning torque between the seating (2) and the over-injected casing (1).

16. The process of any of claims 14-15 **characterized in that** the over-injection position further comprises the steps of:
a) generating a vacuum in the cavity (110) through connecting means (130) by vacuum-generating means (131);
b) introducing the oveir-injection product in the cavity (110) through entrance means (200) by introduction means (210);
c) generating overpressure in the cavity (110) through connecting means (130) by overpressure-generating means (132) in order to obtain a silentblock device.

17. The process of claim 16 **characterized in that** the vacuum-generating step a) comprises:
a1) reaching a first pressure P1 comprised between 2500Pa and 25kPa in the cavity (110) for a first time t1 comprised between 1s and 120s;
a2) ending step a) con with a second pressure P2 comprised between 2500Pa and 25kPa in the cavity (110) for a second time t2 comprised between 1s and 120s.

18. The process of any of claims 16-17 **characterized in that** it further comprises a prior sub-step a0) for reaching a prior temperature T0 comprised between 20°C and 120°C in the outer surface to be over-injected.

19. The process of any of claims 16-18 **characterized in that** the step b) of over-injection material introduction comprises:
b1) introducing said material in the cavity which is at a first temperature T1 comprised between 100 °C and 400 °C for a third time t3 comprised between 1 s and 120s;
b2) ending step b) with a third pressure P3 comprised between 2 MPa and 100 MPa in the cavity (110) for a fourth time t4 comprised between 1 s and 120s.

20. The process of any of claims 16-19 **characterized in that** the step c) of overpressure generation comprises:
c1) starting with a fourth pressure P4 comprised between 2 MPa and 100 MPa in the cavity (110) for a fifth time t5 comprised between 1s and 120s;
c2) ending step c) with a fifth pressure P5 comprised between 2 MPa and 100 MPa in the cavity (110)

21. The process of any of claims 16-20 **characterized in that** it further comprises previously drying the surface to be over-injected.

22. The process of claim 21 **characterized in that** the previous drying step comprises reaching a drying temperature comprised between 20 °C and 150 °C in the surface to be over-injected for a drying time t'0 comprised between 1 s and 120s.

23. The process of any of claims 16-22 **characterized in that** it further comprises subsequently curing the over-injected surface.

24. The process of claim 23 **characterized in that** the curing step comprises reaching a subsequent temperature Tn comprised between 20°C and 150 °C in the over-injected surface for a subsequent time comprised between 1s and 120s.

25. An apparatus for manufacturing the device of any of claims 1-13 by means of the process of any of claims 14-24, wherein said apparatus further comprises coupling means (120) for:
coupling the containment means (100) to the surface to be over-injected;
assuring tightness between the containment means (100) and the surface to be over-injected; adapting the shape of the containment means (100) to the surface to be over-injected.

26. The apparatus of claim 25 further comprising connecting means (130) located in the containment means (100), to allow a pressure selected from vacuum pressure and overpressure to be generated in the cavity (110).

27. The apparatus of any of claims 25-26 further comprising:
pressure measuring means (140) located in the containment means (100), for measuring the pressure in the cavity (110);
temperature measuring means (150) located in the containment means (100), for measuring the temperature in the cavity (110).

28. The apparatus of any of claims 25-27 further comprising:
introduction means (210) for introducing the over-injection product in the cavity (110) through the entrance means (200).

29. The apparatus of any of claims 25-28 further comprising:
vacuum-generating means (131) for generating a vacuum pressure in the cavity (110) through the connecting means (130);
overpressure-generating means (132) for generating an overpressure in the cavity (110) through the connecting means (130)

## Patentansprüche

1. Silentbloc-Vorrichtung mit:
einem im Wesentlichen zylindrischen Silentbloc (4);
einem Silentbloc-Sitz (2) mit:
einem Sitzgehäuse (20) zum Aufnehmen des Silentbloc (4), wobei das Sitzgehäuse (20) konfiguriert ist, um eine Schwenkbewegung des Silentbloc (4) in dem Sitzgehäuse (20) zu erlauben;
einer Sitzöffnung (211) in jedem Ende des Sitzes, die konfiguriert ist, um das Einführen des Silentbloc (4) in das Sitzgehäuse (20) zu erlauben;
einem Stoßfänger (3) zwischen dem Silentbloc (4) und dem Sitz (2), um die Schwenkbewegung zwischen dem Silentbloc (4) und dem Sitz (2) einzuschränken;
einem im Wesentlichen zylindrischen Mantel (1), mit:
einem Mantelgehäuse (10) zum Aufnehmen des Sitzes (2), wobei das Mantelgehäuse (10) konfiguriert ist, um der relativen Bewegung zwischen dem Mantel (1) und dem Sitz (2) vorzubeugen;
einer Mantelöffnung (111) in jedem Ende des Mantels, die konfiguriert ist, um das Einführen des Sitzes (2) in das Mantelgehäuse (10) zu erlauben;
wobei der Mantel (1) und der Sitz (2) Folgendes aufweisen:
erste Verbindungsmittel zwischen dem Mantel (1) und dem Sitz (2), um den Sitz (2) an den Mantel (1) zu klemmen, wobei das erste Verbindungsmittel Folgendes aufweist:
einen ersten kegelstumpfförmigen Abschnitt (121), der eine Innenkontur in jedem Ende des Mantels (1) hat, wobei der erste kegelstumpfförmige Abschnitt (121) von jedem Ende des Mantels (1) zu dem Mantelgehäuse (10) konvergiert, um einen ersten konkaven kegelstumpfförmigen Abschnitt (121) zu bilden;
einen ersten konjugierten kegelstumpfförmigen Abschnitt (122), der eine erste Außenkontur in jedem Ende des Sitzes (2) hat, wobei der erste konjugierte kegelstumpfförmige Abschnitt (122) von jedem Ende des Sitzes (2) konvergiert, um einen ersten konjugierten konvexen kegelstumpfförmigen Abschnitt (122) zu bilden, wobei der erste konjugierte konvexe kegelstumpfförmige Abschnitt (122) konfiguriert ist, um mit dem ersten konkaven kegelstumpfförmigen Abschnitt (121) gekoppelt zu werden, da die erste Außenkontur in die
erste Innenkontur passt,
**dadurch gekennzeichnet, dass** der im Wesentlichen zylindrische Mantel (1) durch Überspritzen von Kunststoffmaterial auf eine zu überspritzende Außenfläche des Sitzes (2), der den Stoßfänger (3) und den Silentbloc (4) enthält, erzielt wird.

2. Vorrichtung nach Anspruch 1, wobei der Sitz (2) und der Silentbloc-Stoßfänger (3) Folgendes aufweisen:
zweite Verbindungsmittel zwischen dem Sitz (2) und dem Stoßfänger (3), um den Stoßfänger (3) an den Sitz (2) zu klemmen, wobei das zweite Verbindungsmittel Folgendes aufweist:
einen zweiten kegelstumpfförmigen Abschnitt (232), der eine zweite Innenkontur in jedem Ende des Sitzes (2) hat, wobei der zweite kegelstumpfförmige Abschnitt (232) von jedem Ende des Sitzes (2) zu dem Sitzgehäuse (20) konvergiert, um einen zweiten konkaven kegelstumpfförmigen Abschnitt (232) zu bilden;
einen zweiten konjugierten kegelstumpfförmigen Abschnitt (233), der eine zweite Außenkontur in jedem Ende des Stoßfängers (3) hat,
wobei der zweite konjugierte kegelstumpfförmige Abschnitt (233) von jedem Ende des Stoßfängers (3) konvergiert, um einen zweiten konjugierten konvexen kegelstumpfförmigen Abschnitt (233) zu bilden, wobei der zweite konjugierte konvexe kegelstumpfförmige Abschnitt (233) konfiguriert ist, um mit dem zweiten konkaven kegelstumpfförmigen Abschnitt (232) gekoppelt zu werden, da die zweite Außenkontur in die zweite Innenkontur passt.

3. Vorrichtung nach einem der Ansprüche 1 bis, wobei der Mantel (1) und der Sitz (2) Folgendes aufweisen:
erste Justiermittel zwischen dem Mantel (1) und dem Gehäuse (2),
Folgendes aufweisend:
einen Mantelabschnitt (1210) zwischen den Enden des Mantels (1), der eine dritte konjugierte Innenkontur hat;
einen ersten Sitzabschnitt (1220) zwischen den Enden des Sitzes (2), der eine dritte konjugierte Außenkontur hat;
derart konfiguriert, dass der Sitz (2) eng mit dem Mantel (1) gekoppelt ist, da die dritte konjugierte Außenkontur in die dritte Innenkontur passt.

4. Vorrichtung nach einem der Ansprüche 1 bis 3, wobei der Sitz (2) und der Stoßfänger (3) Folgendes aüfweisen:
zweite Justiermittel zwischen dem Sitz (2) und dem Stoßfänger (3), Folgendes aufweisend:
einen zweiten Sitzabschnitt (2320) zwischen den Enden des Sitzes (2) mit einer vierten Innenkontur;
einen ersten Stoßfängerabschnitt (2330) zwischen den Enden des Stoßfängers (3) mit einer vierten konjugierten Außenkontur;
derart konfiguriert, dass der Stoßfänger (3) eng mit dem Sitz (2) gekoppelt ist, da die vierte konjugierte Außenkontur in die vierte Innenkontur passt.

5. Vorrichtung nach einem der Ansprüche 1 bis 4, wobei der Stoßfänger (3) und der innere Silentbloc oder die Muffe (4) Folgendes aufweisen:
dritte Justiermittel zwischen dem Stoßfänger (3) und dem inneren Silentbloc oder der Muffe (4), Folgendes aufweisend:
einen zweiten Stoßfängerabschnitt (3430) zwischen den Enden des Stoßfängers (3) mit einer fünften Innenkontur;
einen Silentbloc-Abschnitt (3440) zwischen den Enden des Silentbloc (4) mit einer fünften konjugierten Außenkontur;
derart konfiguriert, dass der Silentbloc (4) eng mit dem Stoßfänger (3) gekoppelt ist, da die fünfte konjugierte Außenkontur in die fünfte Innenkontur passt.

6. Vorrichtung nach einem der Ansprüche 1 bis 5, wobei der Stoßfänger (3) eine ringförmige Hohlkehle (30) in jedem Ende des Stoßfängers (3) aufweist, so dass der Stoßfänger (3) einen geringeren Widerstand gegen die Schwenkbewegung für kleine Schwenkwinkel hat.

7. Vorrichtung nach einem der Ansprüche 3 bis 6, wobei:
der Mantel (1) eine Innenfläche hat, die den Mantelabschnitt (1210) und
den ersten kegelstumpfförmigen Abschnitt (121) aufweist;
wobei der Sitz (2) eine konjugierte Außenfläche hat, die den ersten Sitzabschnitt (1220) und den ersten konjugierten kegelstumpfförmigen Anschnitt (122) hat;
die Innenfläche und die konjugierte Außenfläche in jedem Ende des Mangels (1) und des Sitzes (2) eine Führung haben können, um eine innere periphere Fläche zu erzeugen, und eine konjugierte äußere periphere Fläche, die aus kreisförmig, vieleckig und gebogen ausgewählt wird.

8. Vorrichtung nach einem der Ansprüche 1 bis 7 mit einer Stärke H, wobei die kegelstumpfförmigen Abschnitt (121, 122, 232, 233) eine Höhe d haben, wobei d ≤ 0,3 H ist.

9. Vorrichtung nach einem der Ansprüche 1 bis 8, wobei der Mantel (1) aus einem Werkstoff besteht, der ausgewählt wird aus:
thermoplastischer Kunststoff;
aushärtbarer Kunststoff;
Verbundwerkstoff mit Kunststoffmatrix;
geschmolzenes eisenhaltiges Material;
Schmiedeeisenmaterial;
geschweißtes eisenhaltiges Material;
Aluminium;
Magnesium;
und Kombinationen davon.

10. Vorrichtung nach einem der Ansprüche 1 bis 9, wobei der Mantel (1) einen Körper aufweist, der aus einer Vielzahl von Teilen gebildet ist.

11. Vorrichtung nach einem der Ansprüche 1 bis 10, wobei der Silentbloc-Sitz (2) aus einem Werkstoff besteht, der ausgewählt wird aus:
thermoplastischer Kunststoff;
aushärtbarer Kunststoff;
Gusseisenlegierung;
Bronze;
gesinterter Werkstoff;
Aluminium;
Magnesium;
und Kombinationen davon.

12. Vorrichtung nach einem der Ansprüche 1 bis 11, wobei der Mantel (1) und der Silentbloc-Sitz (2) mittels eines Verfahrens zusammengefügt werden, das aus Schweißen, Nieten, Überspritzen und Kombinationen davon ausgewählt ist.

13. Vorrichtung nach einem der Ansprüche 1 bis 12, wobei der Stoßfänger (3) aus einem Elastomermaterial hergestellt sein kann, ausgewählt aus:
Naturkautschuk;
synthetischer Kautschuk;
Plastik;
einspritzbares Polyurethan;
und Kombinationen davon.

14. Verfahren zum Herstellen durch Überspritzen der Vorrichtung nach einem der Ansprüche 1 bis 13 mittels eines Geräts zum Überspritzen auf eine zu überspritzende Außenfläche eines Sitzes (2), der einen Stoßfänger (3) und einen Silentbloc (4) enthält, mit einem Überspritzprodukt, um eine Silentbloc-Vorrichtung zu erzielen, wobei das Gerät Folgendes aufweist:
Einschlussmittel (100), die konfiguriert sind, um einen Hohlraum (110) zwischen der zu überspritzenden Fläche und dem Einschlussmittel (100) zu definieren;
Eingangsmittel (200), die sich in dem Einschlussmittel (100) befinden, so dass das Überspritzprodukt in den Hohlraum (110) eingeführt werden kann;
Verfahren **dadurch gekennzeichnet, dass** es die folgenden Schritte aufweist:
i) Bilden eines ersten konjugierten kegelstumpfförmigen Abschnitts (122) in jedem Ende des Sitzes (2);
ii) Platzieren des Sitzes (2), der den Stoßfänger (3) und den Silentbloc (4) enthält, in einer ersten Form (10M);
iii) Verlagern der ersten Form (10M) und einer zweiten Form (20M) zu einer Überspritzposition, in der die zwei Formen (10M, 20M) Einschlussmittel (100) bilden und einen Hohlraum (110) definieren, in den das Überspritzprodukt übergespritzt wird, um die Silentbloc-Vorrichtung aus Kunststoffmaterial auf dem Sitz (2), der den Stoßfänger (3) und den Silentbloc (4) enthält, zu formen;
iv) Verlagern der ersten Form (10M) und der zweiten Form (20M) zu einer Abformposition, in der die Silentbloc-Vorrichtung entfernt wird.

15. Verfahren nach Anspruch 14, das ferner einen Schritt i0) zum Formen einer konjugierten Außenfläche des Sitzes (2) aufweist, definiert durch ein Führen in jedem Ende des Sitzes (2), um das Drehmoment zwischen dem Sitz (2) und dem überspritzten Mantel (1) zu steigern.

16. Verfahren nach einem der Ansprüche 14 bis 15, **dadurch gekennzeichnet, dass** die Überspritzposition ferner die folgenden Schritte aufweist:
a) Erzeugen eines Vakuums in dem Hohlraum (110) durch Verbindungsmittel (130) durch Vakuumerzeugungsmittel (131);
b) Einführen des Überspritzprodukts in den Hohlraum (110) durch Eingangsmittel (200) durch Einführmittel (210);
c) Erzeugen von Überdruck in dem Hohlraum (110) durch Verbindungsmittel (130) durch Überdruckerzeugungsmittel (132), um eine Silentbloc-Vorrichtung zu erzielen.

17. Verfahren nach Anspruch 16, **dadurch gekennzeichnet, dass** der Vakuumerzeugungsschritt a) Folgendes aufweist:
a1) Erreichen eines ersten Drucks P1 zwischen 2500 Pa und 25 kPa in dem Hohlraum (110) während einer ersten Zeit t1 zwischein 1 s und 120 s;
a2) Beenden des Schritts a) mit einem zweiten Druck P2 zwischen 2500 Pa und 25 kPa in dem Hohlraum (110) während einer zweiten Zeit t2 zwischen 1 s und 120 s.

18. Verfahren nach einem der Ansprüche 16 bis 17, **dadurch gekennzeichnet, dass** es ferner einen vorausgehenden Unterschritt a0) zum Erreichen einer vorausgehenden Temperatur T0 zwischen 20 °C und 120 °C in der zu überspritzenden Außenfläche aufweist.

19. Verfahren nach einem der Ansprüche 16 bis 18, **dadurch gekennzeichnet, dass** der Schritt b) des Einführens von Überspritzmaterial Folgendes aufweist:
b1) Einführen des Materials in den Hohlraum, der eine erste Temperatur T1 zwischen 100 °C und 400 °C aufweist, während einer dritten Zeit t3, die zwischen 1 s und 120 s liegt;
b2) Beenden des Schritts b) mit einem dritten Druck P3 zwischen 2 MPa und 100 MPa in dem Hohlraum (110) während einer vierten Zeit t4 zwischen 1 s und 120 s.

20. Verfahren nach einem der Ansprüche 16 bis 19, **dadurch gekennzeichnet, dass** der Schritt c) des Überdruckerzeugens Folgendes aufweist:
c1) Beginnen mit einem vierten Druck P4 zwischen 2 MPA und 100 MPa in dem Hohlraum (110) während einer fünften Zeit t5 zwischen 1 s und 120 s;
c2) Beenden des Schritts c) mit einem fünften Druck P5 zwischen 2 MPa und 100 MPa in dem Hohlraum (110).

21. Verfahren nach einem der Ansprüche 16 bis 20, **dadurch gekennzeichnet, dass** es ferner das vorausgehende Trocknen der Fläche, die zu überspritzen ist, aufweist.

22. Verfahren nach Anspruch 21, **dadurch gekennzeichnet, dass** der vorausgehende Trockenschritt das Erreichen einer Trocknungstemperatur zwischen 20 °C und 51 °C in der Fläche, die zu Überspritzen ist, während einer Trockenzeit t'0 zwischen 1 s und 120 s aufweist.

23. Verfahren nach einem der Ansprüche 16 bis 22, **dadurch gekennzeichnet, dass** es ferner einen nachfolgenden Aushärtschritt der überspritzten Fläche aufweist.

24. Verfahren nach Anspruch 23, **dadurch gekennzeichnet, dass** der das Erreichen einer nachfolgenden Temperatur Tn zwischen 20 °C und 150 °C in der überspritzten Fläche für eine nachfolgende Zeit zwischen 1 s und 120 s aufweist.

25. Gerät zum Herstellen der Vorrichtung nach einem der Ansprüche 1 bis 13 mittels des Prozesses nach einem der Ansprüche 14 bis 24, wobei das Gerät ferner Koppelmittel (120) aufweist, um:
das Einschlussmittel (100) mit der zu überspritzenden Oberfläche zu koppeln;
die Abdichtung zwischen dem Einschlussmittel (100) und der zu überspritzenden Fläche sicherzustellen; die Form des Einschlussmittel (100) an die zu überspritzende Oberfläche anzupassen.

26. Gerät nach Anspruch 25, das ferner Verbindungsmittel (130) aufweist, die sich in dem Einschlussmittel (100) befinden, um das Erzeugen eines Drucks, der von dem in dem Hohlraum (100).zu erzeugenden Vakuumdruck und Überdruck ausgewählt wird, zu erlauben.

27. Gerät nach einem der Ansprüche von 20 bis 26, das ferner Folgendes aufweist:
Druckmessmittel (140), die sich in dem Einschlussmittel (100) befinden, um den Druck in dem Hohlraum (110) zu messen;
Temperaturmessmittel (150), die sich in dem Einschlussmittel (100) befinden, um die Temperatur in dem Hohlraum (110) zu messen.

28. Gerät nach einem der Ansprüche 25 bis 27, das ferner Folgendes aufweist:
Einführmittel (210) zum Einführen des Überspritzprodukts in den Hohlraum (110) durch die Eingangsmittel (200).

29. Gerät nach einem der Ansprüche 25 bis 28, das ferner Folgendes aufweist:
Vakuumerzeugungsmittel (131) zum Erzeugen eines Unterdrucks in dem Hohlraum (110) durch das Verbindungsmittel (130);
Überdruckerzeugungsmittel (132) zum Erzeugen eines Überdrucks in dem Hohlraum (110) durch Verbindungsmittel (130).

## Revendications

1. Un dispositif de silentbloc comprenant:
un silentbloc sensiblement cylindrique (4) ;
une assise du silentbloc (2) comprenant :
un logement de l'assise (20) pour loger le silentbloc (4), ce logement de l'assise (20) étant configuré pour permettre un mouvement de pivotement du silentbloc (4) dans ce logement de l'assise (20) ;
une ouverture de l'assise (211) à chaque extrémité de l'assise configurée pour
permettre l'introduction du silentbloc (4) dans ce logement de l'assise (20),
un amortisseur (3) entre le silentbloc (4) et l'assise (2) pour limiter le mouvement de pivotement entre le silentbloc (4) et l'assise (2) ;
une carcasse sensiblement cylindrique (1) comprenant :
un logement de la carcasse (10) pour recevoir l'assise (2), ce logement de la carcasse (10) étant configuré pour empêcher le mouvement relatif entre la carcasse (1) et l'assise (2) ;
une ouverture de la carcasse (111) à chaque extrémité de la carcasse, configurée pour permettre l'introduction de l'assise (2) dans le logement de la carcasse (10) ;
la carcasse (1) et l'assise (2) comprenant :
des premiers moyens d'assemblage entre la carcasse (1) et l'assise (2) pour fixer l'assise (2) à la carcasse (1), ces premiers moyens d'assemblage comprenant :
une première partie tronconique (121) ayant un premier contour interne à chaque extrémité de la carcasse (1), cette première partie tronconique (121) convergeant de chaque extrémité de la carcasse (1) vers le logement de la carcasse (10) pour former une première partie tronconique concave (121) ;
une première partie tronconique conjuguée (122) ayant un premier contour externe à chaque extrémité de l'assise (2), cette première partie tronconique conjuguée (122) convergeant de chaque extrémité de l'assise (2) pour former une première partie tronconique convexe conjuguée (122), cette première partie tronconique convexe conjuguée (122) étant configurée pour être assemblée à la première partie tronconique concave (121) puisque le premier contour externe s'ajuste dans le premier contour interne ;
**caractérisé en ce que** la carcasse sensiblement cylindrique (1) est obtenue par la technique du surmoulage d'une matière plastiqué sur une surface externe à surmouler, de l'assise (2) contenant l'amortisseur (3) et le silentbloc (4).

2. Le dispositif selon la revendication 1 dans lequel l'assise (2) et l'amortisseur (3) comprennent :
des deuxièmes moyens d'assemblage entre l'assise (2) et l'amortisseur (3) pour fixer l'amortisseur (3) à l'assise (2), ces deuxièmes moyens d'assemblage comprenant :
une deuxième partie tronconique (232) ayant un deuxième contour interne à chaque extrémité de l'assise (2), cette deuxième partie tronconique (232) convergeant de chaque extrémité de l'assise (2) vers le logement de l'assise (20) pour former une deuxième partie tronconique concave (232),
une deuxième partie tronconique conjuguée (233) ayant un deuxième contour externe à chaque extrémité de l'amortisseur (3), cette deuxième partie tronconique conjuguée (233) convergeant de chaque extrémité de l'amortisseur (3) pour former une deuxième partie tronconique convexe conjuguée (233), cette deuxième partie tronconique convexe conjuguée (233) étant configurée pour être assemblée à la deuxième partie tronconique concave (232) puisque le deuxième contour externe s'ajuste dans le deuxième contour interne;

3. Le dispositif selon l'une quelconque des revendications 1-2 dans lequel la carcasse (1) et l'assise (2) comprennent :
des premiers moyens d'ajustement entre la carcasse (1) et l'assise (2) comprenant :
une partie de la carcasse (1210) entre les extrémités de l'assise (2) ayant un troisième contour interne ;
une première partie d'assise (1220) entre les extrémités de l'assise (2) ayant un troisième contour externe ;
configurées pour que l'assise (2) s'assemble hermétiquement à la carcasse (1) puisque le troisième contour externe conjugué s'ajuste au troisième contour interne.

4. Le dispositif selon l'une quelconque des revendications 1-3 dans lequel l'assise (2) et l'amortisseur (3) comprennent :
des deuxièmes moyens d'ajustement entre l'assise (2) et l'amortisseur (3) comprenant :
une deuxième partie d'assise (2320) entre les extrémités de l'assise (2) ayant un quatrième contour interne ;
une première partie d'amortisseur (2330) entre les extrémités de l'amortisseur (3) ayant un quatrième contour externe conjugué ;
configurées pour que l'amortisseur (3) s'assemble hermétiquement à l'assise (1) puisque le quatrième contour externe conjugué s'ajuste au quatrième contour interne.

5. Le dispositif selon l'une quelconque des revendications 1-4 dans lequel l'amortisseur (3) et le silentbloc ou coussinet interne (4) comprennent :
des troisièmes moyens d'ajustement entre l'amortisseur (3) et lé silentbloc ou coussinet interne (4) comprenant :
une deuxième partie d'amortisseur (3430) entre les extrémités de l'amortisseur (3) ayant un cinquième contour interne ;
une partie de silentbloc (3440) entre les extrémités du silentbloc (4) ayant un cinquième contour externe conjugué ;
configurées pour que le silentbloc (4) soit hermétiquement assemblé à l'amortisseur (3) puisque le cinquième contour externe conjugué s'ajuste au cinquième contour interne.

6. Le dispositif selon l'une quelconque des revendications 1-5 dans lequel l'amortisseur (3) comprend une rainure annulaire (30) à chaque extrémité de l'amortisseur (3) de sorte que l'amortisseur (3) a une résistance inférieure au mouvement de pivotement pour de petits angles de pivot.

7. Le dispositif selon l'une quelconque des revendications 3-6 dans lequel :
la carcasse (1) a une surface interne comprenant la partie de la carcasse (1210) et la première partie tronconique (121) ;
l'assise (2) a une surface externe conjuguée comprenant la première partie d'assise (1220) et la première partie tronconique conjuguée (122) ;
la surface interne et la surface externe conjuguée peuvent avoir un dispositif de guidage à chaque extrémité de la carcasse (1) et de l'assise (2) pour former une surface périphérique interne et une surface externe conjuguée qui pourra être circulaire, polygonale et incurvée.

8. Le dispositif selon l'une quelconque des revendications 1-7 ayant une épaisseur H, dans lequel les parties tronconiques (121, 122, 232, 233) ont une hauteur d, d étant ≤0.3H.

9. Le dispositif selon l'une quelconque des revendications 1-8 dans lequel la carcasse (1) est fabriquée dans un des matériaux suivants :
thermoplastique ;
plastique thermodurcissable ;
matériau composite en matière plastique ;
fonte ;
fer doux ;
fer soudé ;
aluminium ;
magnésium ;
et des combinaisons de ces matériaux.

10. Le dispositif selon l'une quelconque des revendications 1-9 dans lequel la carcasse (1) comprend un corps formé de plusieurs pièces.

11. Le dispositif selon l'une quelconque des revendications 1-10 dans lequel l'assise du silentbloc (2) est fabriquée dans un des matériaux suivants :
thermoplastique ;
plastique thermodurcissable ;
alliage de fonte ;
bronze ;
matériau fritté ;
aluminium ;
magnésium ;
et des combinaisons de ces matériaux.

12. Le dispositif selon l'une quelconque des revendications 1-11 dans lequel la carcasse (1) et l'assise du silentbloc (2) sont assemblées par l'un des procédés suivants : soudage, rivetage, surmoulage et des combinaisons de ces procédés.

13. Le dispositif selon l'une quelconque des revendications 1-12 dans lequel l'amortisseur (3) peut être fabriqué dans un des matériaux élastomères suivants :
caoutchouc naturel ;
caoutchouc synthétique ;
plastique ;
polyuréthane injectable ;
et des combinaisons de ces matériaux.

14. Un procédé pour fabriquer par la technique du surmoulage le dispositif selon l'une quelconque des revendications 1-13 au moyen d'un appareil pour surmouler sur une surface externe à surmouler d'une assise (2), contenant un amortisseur (3) et un silentbloc (4), un produit de surmoulage afin d'obtenir un dispositif de silentbloc, cet appareil comprenant :
des moyens de confinement (100) configurés pour former une cavité (110) entre la surface à surmouler et ces moyens de confinement (100) ;
des moyens d'entrée (200) situés dans les moyens de confinement (100), de sorte à permettre l'introduction du produit de surmoulage dans la cavité (110) ;
ce procédé étant **caractérisé en ce qu'**il comprend les étapes suivantes :
i) formation d'une première partie tronconique conjuguée (122) à chaque extrémité de l'assise (2) ;
ii) placement de l'assise (2) contenant l'amortisseur (3) et le silentbloc (4) dans un premier moule (10M) ;
iii) déplacement du premier moule (10M) et d'un deuxième moule (20M) pour les mettre dans une position de surmoulage, dans laquelle les deux moules (10M, 20M) forment les moyens de confinement (100) et définissent une cavité (110) où le produit de surmoulage est surmoulé pour former le dispositif de silentbloc en matière plastique sur l'assise (2) contenant l'amortisseur (3) et le silentbloc.
iv) déplacement du premier moule (10M) et du deuxième moule (20M) pour les mettre dans une position de démoulage dans laquelle le dispositif de silentbloc est retiré.

15. Le procédé selon la revendication 14 qui comprend aussi une étape préalable i0) pour former une surface externe conjuguée de l'assise (2) définie par un dispositif de guidage à chaque extrémité de l'assise (2), pour augmenter le couple de rotation entre l'assise (2) et la carcasse surmoulée (1).

16. Le procédé selon l'une quelconque des revendications 14-15 **caractérisé en ce que** la position de surmoulage comprend aussi les étapes suivantes :
a) produire une dépression dans la cavité (110) à travers des moyens de connexion, (130) à l'aide de moyens de production de vide (131) ;
b) introduire le produit de surmoulage dans la cavité (110) à travers des moyens d'entrée (200) à l'aide de moyens d'introduction (210) ;
c) produire une surpression dans la cavité (110) à travers des moyens de connexion (130) par des moyens de production de surpression (132) afin d'obtenir un dispositif de silentbloc.

17. Le procédé selon la revendication 16 **caractérisé en ce que** l'étape de génération de vide a) comprend les opérations suivantes :
a1) Obtenir une première pression P1 de 2500Pa à 25kPa dans la cavité (110) pendant un premier temps t1 de 1s à 120 s.
a2) Finir l'étape a) par une deuxième pression P2 de 2500Pa à 25kPa dans la cavité (110) pendant un deuxième temps t1 de 1s à 120 s.

18. Le procédé selon l'une quelconque des revendications 16-17 **caractérisé en ce qu'**il comprend également une sous-étape préalable a0) pour atteindre une température préalable T0 de 20°C à 120°C sur la surface externe à surmouler.

19. Le procédé selon l'une quelconque des revendications 16-18 **caractérisé en ce que** l'étape b) de l'introduction du matériau de surmoulage comprend les opérations suivantes :
b1) introduire ce matériau dans la cavité qui se trouve à une première température T1 de 100°C à 400°C pendant un troisième temps t3 de 1s à 120 s.
b2) terminer l'étape b) avec une troisième pression P3 de 2 Mpa à 100 Mpa dans la cavité (110) pendant un quatrième temps t4 de 1 à 120 s.

20. Le procédé selon l'une quelconque des revendications 16-19 **caractérisé en ce que** l'étape c) de la génération de surpression comprend les opérations suivantes :
c1) commencer par une quatrième pression P4 de 2 Mpa à 100 Mpa dans la cavité (110) pendant un cinquième temps t5 de 1s à 120 s.
c2) terminer l'étape c) par une cinquième pression P5 de 2 Mpa à 100 Mpa dans la cavité (110).

21. Le procédé selon l'une quelconque des revendications 16-20 **caractérisé en ce qu'**il comprend également le séchage préalable de la surface à surmouler.

22. Le procédé selon la revendication 21 **caractérisé en ce que** l'étape de séchage préalable consiste à atteindre une température de séchage de 20°C à 150°C sur la surface à surmouler pendant un temps de séchage t'0 de 1s à 120s.

23. Le procédé selon l'une quelconque des revendications 16-22 **caractérisé en ce qu'**il comprend également ensuite le durcissement de la surface surmoulée.

24. Le procédé selon la revendication 23 **caractérisé en ce que** l'étape de durcissement consiste à atteindre une température ultérieure Tn de 20°C à 150°C sur la surface surmoulée pendant le temps suffisant de 1s à 120s.

25. Un appareil pour fabriquer le dispositif selon l'une quelconque des revendications 1-13 par les moyens du procédé selon l'une quelconque des revendications 14-24, dans lequel cet appareil comprend également des moyens d'assemblage (120) pour :
assembler les moyens de confinement (100) à la surface à surmouler ;
assurer l'étanchéité entre les moyens de confinement (100) et la surface à surmouler ;
adapter la forme des moyens de confinement (100) à la surface à surmouler.

26. L'appareil selon la revendication 25 comprenant également des moyens de connexion (130) situés dans les moyens de confinement (100), pour permettre une pression pouvant aller d'une pression à vide à une surpression à produire dans la cavité (110).

27. L'appareil selon l'une quelconque des revendications 25-26 comprenant également :
des moyens de mesure de la pression (140) situés dans les moyens de confinement (100), pour mesurer la pression dans la cavité (110) ;
des moyens de mesure de la température (150) situés dans les moyens de confinement (100) pour mesurer la température dans la cavité (110).

28. L'appareil selon l'une quelconque des revendications 25-27 comprenant également :
des moyens d'introduction (210) pour introduire le produit de surmoulage dans la cavité (110) à travers les moyens d'entrée (200).

29. L'appareil selon l'une quelconque des revendications 25-28 comprenant également :
des moyens de production de vide (131) pour générer une pression à vide dans la cavité (110) à travers les moyens de connexion (130) ;
des moyens de production de surpression (132) pour produire une surpression dans la cavité (110) à travers les moyens de connexion (130).
